# EUROPEAN PATENT APPLICATION

(11) **EP 3 323 901 A1**
(43) Date of publication of application: **23.05.2018**
(21) Application number: 16824268.3
(22) Date of filing: 29.06.2016
(51) Int. Cl.: C22C 21/00, B23K 35/22, B23K 35/28

(54) **ALUMINUM ALLOY BRAZING SHEET**

(30) Priority: 13.07.2015 JP 2015139749
(71) Applicant: UACJ Corporation, Tokyo 100-0004 (JP)
(72) Inventor: ITOH Yasunaga, Tokyo 100-0004 (JP); YAMAYOSHI Tomoki, Tokyo 100-0004 (JP); YANAGAWA Yutaka, Tokyo 100-0004 (JP)
(74) Representative: Müller-Boré & Partner Patentanwälte PartG mbB
(86) International application number: PCT/JP2016/069256
(87) International publication number: WO 2017/010288

(57) **Abstract**

A brazing sheet used for brazing aluminum in an inert gas atmosphere or vacuum is formed by arranging a brazing material on one side or both sides of a core material made of pure aluminum or aluminum alloy, and performing cladding with an intermediate material interposed between the core material and the brazing material. The brazing material includes 6% to 13% of Si and the balance being Al and inevitable impurities. The intermediate material includes 0.01% to 1.5% of Bi, at least one of 0.05% or more of Li, 0.05% or more of Be, 0.05% or more of Ba, and 0.05% or more of Ca, and the balance being Al and inevitable impurities. The present invention provides an aluminum alloy brazing sheet enabling excellent brazing properties by promptly supplying Bi and Li, Be, Ca, and/or Mg into the brazing material during brazing heating, causing these elements to be eluted in the molten brazing material after start of melting the brazing material, and effectively embrittling the oxide film on the surface of the brazing material.

## Description

### TECHNICAL FIELD

The present invention relates to an aluminum alloy brazing sheet used for brazing aluminum, without using a flux, in an inert gas atmosphere or a vacuum.

### BACKGROUND ART

Brazing is widely used as a method for jointing aluminum products including a number of fine jointing portions, such as aluminum heat exchangers and mechanical components. Brazing aluminum requires breaking an oxide film covering the surface, and bring the molten brazing material into contact with base metal or brazing material molten in the same manner. Methods for breaking an oxide film are broadly classified into a method of using a flux and a method of heating the oxide film in vacuum, and both of them are put to practical use.

An application range of brazing is wide, and the most typical example is a heat exchanger for vehicles. Most of heat exchangers for vehicles, such as radiators, heaters, condensers, and evaporators, are made of aluminum, and most of them are manufactured by brazing. Among brazing methods, a method of applying a noncorrosive flux and heating it in a nitrogen gas atmosphere occupies the majority part of the methods at present.

In recent years, due to change in the driving system in electric cars and hybrid cars, heat exchangers equipped with electronic components, such as an inverter cooler, appear, and residue of a flux is regarded as problem in increasing cases. For this reason, some of inverter coolers are manufactured by vacuum brazing in which no flux is used. However, vacuum brazing requires high equipment cost and high maintenance cost for the heating furnace, and has problem in productivity and brazing stability. Such a situation increases needs for jointing without using a flux in a nitrogen gas furnace.

To respond to the needs, the inventors of the present invention have developed a clad material for performing brazing without using a flux in an inert gas atmosphere. The clad material is formed by interposing metal powder between the core material and the brazing material, heating them to a temperature equal to or higher than the solidus temperature of the metal powder, to generate a liquid phase in the metal powder and planarly joint the core material with the brazing material, and thereafter subjecting the structure to hot clad rolling. The metal powder includes at least one of Li, Be, Ba, Ca, and Mg, and has a solidus temperature lower than the solidus temperatures of the core material and the brazing material. By using the clad material, no oxide is formed on the surface of the brazing material at the stage of manufacturing the material, unlike the case of adding Li, Be, Ba, Ca, and/or Mg to the brazing material, but Li, Be, Ba, Ca, and/or Mg is eluted and diffused in the molten brazing material at the stage of brazing, to embrittle the oxide film on the surface of the molten brazing material. This structure effectively improves brazing properties.

However, a method of supplying Li, Be, Ba, Ca, and/or Mg in metal powder into a brazing material has the following problem, in manufacturing of the material. Specifically, in the process of manufacturing a clad material in a producing factory, the brazing material before rolling has a comparatively large thickness, and causes necessity for interposing a large quantity of metal powder between the core material and the brazing material. For this reason, when the addition quantity of Li, Be, Ba, Ca, and/or Mg is increased, because a firm oxide film is formed on the surface of the metal powder, the oxide film is not broken even when the film is heated to the solidus temperature of the metal powder or higher, and uniform planar joint of the core material with the brazing material becomes difficult.

The metal powder remaining in the powder state in the interface without being jointed has influence on the cladding by hot rolling, and easily causes peeling in the material being rolled, and blister in annealing and heating. In addition, use of a large quantity of metal powder with high oxidizability requires special safety management on the manufacturing site, and necessity for strict management to prevent mixing of the metal powder into other materials, and causes increase in cost in addition to unstableness in quality.

By contrast, some methods are presented, as a method of diffusing Mg into the brazing material during brazing heating, to enable brazing without using a flux in an inert gas atmosphere. Examples of these methods include a method of diffusing Mg added to the core material into the brazing material, and a method of diffusing Mg added to a sacrificial anode material into the brazing material. These methods prevent formation of an oxide film on the surface of the brazing material during manufacturing of the clad material and brazing heating, and enable Mg to effectively act on destruction of the oxide film on the surface of the brazing material.

However, in the clad material, the core material and the sacrificial anode material have individual functions to be achieved, and increase in the addition quantity of Mg causes excessive erosion due to molten brazing material, and causes adverse influence on corrosion resistance. In addition, restriction on the addition quantity of Mg causes deficiency in action of destruction of the oxide film on the surface of the brazing material. In particular, when the heating speed in brazing heating is high, the action of breaking the oxide film on the surface of the brazing material can hardly be expected, and the brazing properties extremely deteriorate. When Li, Be, Ba, and/or Ca is to be added to the core material or the sacrificial anode material, the addition quantity thereof is more limited than that of Mg, and the effect of Mg intended in the presentation described above can hardly be expected.

In addition, another method has been presented. In the method, Bi is added to the brazing material, to promote the action of breaking the oxide film with Mg, and greatly improve the brazing properties in brazing without applying a flux. However, addition of Bi to the brazing material has the following problem. Specifically, when Bi of 0.05% or more is added to the brazing material, a Bi-based oxide is formed on the surface of the brazing material at the stage of manufacturing the material. Performing brazing with brazing material in this state causes discoloration and a marked decrease in brazing properties.

Bi has a low melting point (approximately 270°C), and is hardly dissolved in aluminum. For this reason, in hot rolling and/or annealing, Bi scattered in a state of a substantially pure substance is molten, and adsorbs oxygen, to form a Bi-based thick oxide film and decrease brazing properties. Reducing the Bi quantity in the brazing material is one of methods for suppressing it, but reducing the Bi quantity prevents obtaining sufficient effect of Bi. A certain effect is obtained by performing pretreatment before brazing to remove the Bi-based oxide. However, in an inert gas atmosphere with oxygen concentration of 20 ppm or higher, re-oxidation occurs during brazing preheating, and the effect of the pretreatment is lost. By contrast, in a low-oxygen atmosphere, excellent brazing properties can be exhibited, but achieving a low-oxygen atmosphere requires much cost, and is not practicable.

### PRIOR ART DOCUMENT

### PATENT LITERATURES

[Patent Literature 1] Japanese Patent Publication 2004-358519-A
[Patent Literature 2] Japanese Patent Publication 2013-001941-A
[Patent Literature 3] Japanese Patent Publication 2014-050861-A

### SUMMARY OF INVENTION

### PROBLEM TO BE SOLVED

The present invention has been made to solve the problems described above. An object of the present invention is to provide an aluminum alloy brazing sheet enabling excellent brazing properties by promptly supplying Bi and Li, Be, Ca, and/or Mg into the brazing material during brazing heating, causing these elements to be eluted in the molten brazing material after start of melting the brazing material, and effectively embrittling the oxide film on the surface of the brazing material.

### MEANS FOR SOLVING THE PROBLEM

An aluminum alloy brazing sheet according to claim 1 to achieve the object described above is a brazing sheet used for brazing aluminum (including aluminum alloy, the same is applicable to the following) in an inert gas atmosphere or vacuum, and formed by arranging a brazing material on one side or both sides of a core material made of pure aluminum or aluminum alloy, the brazing material including 6% to 13% of Si and the balance being Al and inevitable impurities, and performing cladding with an intermediate material interposed between the core material and the brazing material, the intermediate material including 0.01% to 1.5% of Bi, at least one of 0.05% or more of Li, 0.05% or more of Be, 0.05% or more of Ba, and 0.05% or more of Ca, and the balance being Al and inevitable impurities. In the following explanation, all the alloy components are expressed by % by mass.

An aluminum alloy brazing sheet according to claim 2 is a brazing sheet used for brazing aluminum in an inert gas atmosphere or vacuum, and formed by arranging a brazing material on one side or both sides of a core material made of pure aluminum or aluminum alloy, the brazing material including 6% to 13% of Si and the balance being Al and inevitable impurities, and performing cladding with an intermediate material and a sacrificial anode material interposed between the core material and the brazing material such that the materials are arranged in an order of the core material, the sacrificial anode material, the intermediate material, and the brazing material, the intermediate material including 0.01% to 1.5% of Bi, at least one of 0.05% or more of Li, 0.05% or more of Be, 0.05% or more of Ba, and 0.05% or more of Ca, and the balance being Al and inevitable impurities, the sacrificial anode material including 0.9% to 6% of Zn and the balance being Al and inevitable impurities.

An aluminum alloy brazing sheet according to claim 3 is a brazing sheet used for brazing aluminum in an inert gas atmosphere or vacuum, and formed by arranging a brazing material on one side of a core material made of pure aluminum or aluminum alloy, the brazing material including 6% to 13% of Si and the balance being Al and inevitable impurities, arranging a sacrificial anode material on the other side of the core material, the sacrificial anode material including 0.9% to 6% of Zn and the balance being Al and inevitable impurities, and performing cladding with an intermediate material interposed between the core material and the brazing material, the intermediate material including 0.01% to 1.5% of Bi and at least one of 0.05% or more of Li, 0.05% or more of Be, 0.05% or more of Ba, and 0.05% or more of Ca, and the balance being Al and inevitable impurities.

An aluminum alloy brazing sheet according to claim 4 is the brazing sheet according to any one of claims 1 to 3, wherein the core material of the aluminum alloy includes at least one of 1.8% or less of Mn, 1.2% or less of Si, 1.0% or less of Fe, 1.5% or less of Cu, 0.8% or less of Zn, 0.2% or less of Ti, and 0.5% or less of Zr, and the balance being Al and inevitable impurities.

An aluminum alloy brazing sheet according to claim 5 is the brazing sheet according to any one of claims 1 to 4, wherein the intermediate material further includes at least one of 13% or less of Si, 6% or less of Cu, and 6% or less of Zn.

An aluminum alloy brazing sheet according to claim 6 is the brazing sheet according to any one of claims 1 to 5, wherein one or both of the core material and the intermediate material further includes 0.4% to 6% of Mg.

An aluminum alloy brazing sheet according to claim 7 is the aluminum alloy brazing sheet according to any one of claims 1 to 6, wherein the brazing sheet is used for brazing aluminum in an inert gas atmosphere or vacuum, without using a flux.

An aluminum alloy brazing sheet according to claim 8 is the aluminum alloy brazing sheet according to any one of claims 1 to 5, wherein the brazing sheet is used for brazing aluminum in an inert gas atmosphere, and a fluoride-based flux is applied to whole or part of a brazed portion with an application quantity of 1 to 20 g/m².

### EFFECTS OF THE INVENTION

The present invention provides an aluminum alloy brazing sheet enabling excellent brazing properties by promptly supplying Bi and Li, Be, Ca, and/or Mg into the brazing material during brazing heating, causing these elements to be eluted in the molten brazing material after start of melting the brazing material, and effectively embrittling the oxide film on the surface of the brazing material.

### BRIEF DESCRIPTION OF DRAWINGS

Fig. 1 is an outside drawing of a cup test piece to evaluate a fillet formation state in an example of the present invention; and
Fig. 2 is a diagram illustrating fillet formation states with evaluation of ⊚ to × for a fillet formed on the external side of a flare groove joint of the cup test piece.

### EMBODIMENTS OF THE INVENTION

A first embodiment of an aluminum alloy brazing sheet according to the present invention is a brazing sheet used for brazing aluminum in an inert gas atmosphere or vacuum, the brazing sheet being formed by arranging a brazing material on one side or both sides of a core material made of pure aluminum or aluminum alloy, the brazing material including 6% to 13% of Si and the balance being Al and inevitable impurities, and performing cladding with an intermediate material interposed between the core material and the brazing material, the intermediate material including 0.01% to 1.5% of Bi, at least one of 0.05% or more of Li, 0.05% or more of Be, 0.05% or more of Ba, and 0.05% or more of Ca, and the balance being Al and inevitable impurities.

A second embodiment is a brazing sheet used for brazing aluminum in an inert gas atmosphere or vacuum, the brazing sheet being formed by arranging a brazing material on one side or both sides of a core material made of pure aluminum or aluminum alloy, the brazing material including 6% to 13% of Si and the balance being Al and inevitable impurities, and performing cladding with an intermediate material and a sacrificial anode material interposed between the core material and the brazing material such that the materials are arranged in an order of the core material, the sacrificial anode material, the intermediate material, and the brazing material, the intermediate material including 0.01% to 1.5% of Bi, at least one of 0.05% or more of Li, 0.05% or more of Be, 0.05% or more of Ba, and 0.05% or more of Ca, and the balance being Al and inevitable impurities, the sacrificial anode material including 0.9% to 6% of Zn and the balance being Al and inevitable impurities.

A third embodiment is a brazing sheet used for brazing aluminum in an inert gas atmosphere or vacuum, the brazing sheet being formed by arranging a brazing material on one side of a core material made of pure aluminum or aluminum alloy, the brazing material including 6% to 13% of Si and the balance being Al and inevitable impurities, arranging a sacrificial anode material on the other side of the core material, the sacrificial anode material including 0.9% to 6% of Zn and the balance being Al and inevitable impurities, and performing cladding with an intermediate material interposed between the core material and the brazing material, the intermediate material including 0.01% to 1.5% of Bi and at least one of 0.05% or more of Li, 0.05% or more of Be, 0.05% or more of Ba, and 0.05% or more of Ca, and the balance being Al and inevitable impurities.

The core material is preferably pure aluminum, or aluminum alloy including at least one of 1.8% or less of Mn, 1.2% or less of Si, 1.0% or less of Fe, 1.5% or less of Cu, 0.8% or less of Zn, 0.2% or less of Ti, and 0.5% or less of Zr, and the balance being Al and inevitable impurities. The core material preferably includes 0.4% to 6% of Mg.

In the core material of aluminum alloy, Mn effectively functions to improve the strength and regulate the potential. A preferable content of Mn is 1.8% or less, and a content exceeding 1.8% causes easy occurrence of crack in rolling of the material. A more preferable content range is 0.3% to 1.8%. A content less than 0.3% has difficulty in obtaining a sufficient effect of improving the strength.

Si effectively functions to improve the strength. A preferable content of Si is 1.2% or less. A content exceeding 1.2% decreases the melting point, causes local melting in brazing, and may cause deformation of the core material to decrease the corrosion resistance. A more preferable lower limit value of the Si content to enhance the strength is 0.3%.

Fe effectively functions to improve the strength. A preferable content of Fe is 1.0% or less. A content exceeding 1.0% decreases the corrosion resistance, and causes easy occurrence of huge deposits. A more preferable lower limit value of the Fe content to enhance the strength is 0.2%.

Cu effectively functions to enhance the strength and regulate the potential. A preferable content of Cu is 1.5% or less. A content exceeding 1.5% is not preferable, because it causes easy occurrence of intergranular corrosion, and decreases the melting point. A more preferable lower limit value of the Cu content to enhance the strength is 0.2%.

Zn effectively functions to regulate the potential. A preferable content of Zn is 0.8% or less. A content exceeding 0.8% decreases the natural electrode potential, and shortens through-life due to corrosion. A more preferable lower limit value of the Zn content to regulate the potential is 0.1%.

Ti effectively functions to advance corrosion in a layered manner. A preferable content of Ti is 0.2% or less. A content exceeding 0.2% causes easy occurrence of huge deposits, and impedes rolling properties and corrosion resistance. A more preferable lower limit value of the Ti content to advance layered corrosion is 0.06%. Zr effectively functions to increase the crystal grain size. A preferable content of Zr is 0.5% or less. A content of Zr exceeding 0.5% causes easy occurrence of crack in manufacturing of the material. A more preferable lower limit value of the Zr content to increase the crystal grain size is 0.2%.

The brazing material is an ordinary Al-Si brazing material, and the Si quantity thereof is set to 6% to 13%. A Si content less than 6% fails to achieve sufficient jointing properties. A Si content exceeding 13% causes easy occurrence of crack in manufacturing of the material, and causes difficulty in manufacturing of the brazing sheet.

Bi included in the intermediate material interposed between the core material and the brazing material promotes destruction of an oxide film with Li, Be, Ba, Ca, and/or Mg supplied from the intermediate material and/or the core material to the brazing material in brazing heating, to improve the brazing properties. The intermediate material functions to supply these elements to the brazing material. A preferable content of Bi included in the intermediate material is 0.01% to 1.5%. A Bi content less than 0.01% causes deficiency of Bi eluted to the brazing material, and causes difficulty in achieving the function to break an oxide film on the surface of the brazing material. A Bi content exceeding 1.5% causes easy occurrence of crack in rolling of the material, and causes difficulty in manufacturing of the brazing sheet. A more preferable content of Bi is 0.1% to 1.5%.

As described above, Li, Be, Ba, Ca, and Mg included in the intermediate material interposed between the core material and the brazing material is diffused into the brazing material in brazing heating, to form a unique oxide in the aluminum oxide film covering the surface of the brazing material, induce destruction of the aluminum oxide film by formation of the unique oxide, and markedly improve the brazing properties. The intermediate material functions to supply these elements to the brazing material.

A preferable content of each of Li, Be, Ba, and Ca to be included in the intermediate material is 0.05% or more. A content less than 0.05% causes deficiency of each of the substances diffused and eluted into the brazing material, and causes difficulty in achieving the function to break an oxide film on the surface of the brazing material. A preferable upper limit value of the content is 1.5%. A content exceeding 1.5% causes easy occurrence of crack in casting, and in rolling to the intermediate material.

As described above, Bi included in the intermediate material promotes the function to break the oxide film, with Li, Be, Ba, Ca, and/or Mg supplied from the intermediate material and/or the core material to the brazing material in brazing heating, to effectively improve the brazing properties. When Bi exceeding 0.05% is directly added to the brazing material, a thick Bi-based oxide is formed at the stage of manufacturing the material and/or during brazing heating. The thick Bi-based oxide is accompanied by discoloration, and markedly deteriorates brazing properties. For this reason, addition of Bi requires pretreatment before brazing, and a low-oxygen atmosphere. By contrast, according to the present invention with a structure of supplying Bi to the brazing material through the intermediate material, Bi is hardly solid-diffused in aluminum. For this reason, until the intermediate material is dissolved with the molten brazing material or the intermediate material itself is molten, Bi is not supplied into the brazing material and no Bi-based oxide is formed. In this way, Bi can be supplied with a quantity that is not effective when it is directly added to the brazing material, and effectively promotes the function of destroying an oxide film with Li, Be, Ba, Ca, and/or Mg in the surface of the brazing material. Accordingly, excellent brazing properties can be achieved, without pretreatment before brazing or low-oxygen concentration atmosphere. Bi of 0.05% or less may be added to the brazing material, as well as addition of Bi to the intermediate material.

Because Li, Be, Ba, Ca, and/or Mg included in the intermediate material has low oxide formation free energy, they are diffused into the brazing material in brazing heating, to form a unique oxide in the aluminum oxide film covering the surface of the brazing material, and induce destruction of the aluminum oxide film by formation of the unique oxide. When Li, Be, Ba, Ca, and/or Mg is directly added to the brazing material, because formation of a unique oxide proceeds also at the stage of manufacturing the brazing sheet, not only the added Mg is consumed wastefully, but also the surface oxide film becomes firmer. In this case, performing etching before brazing becomes necessary to peel off the oxide film.

By contrast, in the case of supplying Li, Be, Ba, and/or Ca to the brazing material through the intermediate material and supplying Mg to the brazing material through the intermediate material or the core material, formation of a unique oxide does not progress at the stage of manufacturing the brazing sheet, but the substances are diffused into the brazing material from the intermediate material or the core material at the stage of brazing heating, and brazing heating is performed in an inert gas atmosphere with low oxygen concentration. For this reason, even when the elements described above reach the surface of the brazing material during brazing heating, it causes no intense oxidation enough to make the oxide film firm, but a uniquely formed oxide serves as a starting point to divide the oxide film after melting of the brazing material, and the oxide film is embrittled. In addition, with start of melting of the brazing material, because dissolution of the intermediate material into the molten brazing material also progresses, the elements described above are eluted into the molten brazing material promptly. Because diffusion of elements in the molten brazing material progresses very quickly in comparison with diffusion in a solid, formation of a unique oxide rapidly progresses in the surface of the brazing material, and destruction of the oxide film is promoted.

In the method of supplying Li, Be, Ba, Ca, and/or Mg to the brazing material through the intermediate material, diffusion of the elements into the brazing material progresses with higher concentration than that in a method of simply adding the elements described above to the core material and the sacrificial anode material directly under the brazing material and diffusing the elements into the brazing material. In addition, because dissolution of the intermediate material into the molten brazing material accompanying with start of melting of the brazing material is more than dissolution of the core material and the sacrificial anode material into the molten brazing material, and the supply quantity of the elements described above to the brazing material becomes larger, and formation of the unique oxide is intensively performed. With intensive progress of formation of the unique oxide immediately before brazing, destruction of the aluminum oxide film is induced efficiently and strongly. In this case, the brazing properties are improved, and stable brazing properties can be achieved without performing etching before brazing.

Mg included in the intermediate material or the core material, or both of them, breaks the oxide film and improves the brazing properties, as described above. A preferable Mg content is 0.4% to 6.0%. A Mg content less than 0.4% causes deficiency of the Mg quantity diffused and eluted into the brazing material, and causes difficulty in achieving the function to break the oxide film on the surface of the brazing material. A Mg content exceeding 6.0% causes easy occurrence of crack in manufacturing of the material, and difficulty in manufacturing of the brazing sheet. When Mg is included in the core material, a more preferable upper limit value is 1.3%. A Mg content exceeding 1.3% decreases the melting point of the core material, and causes local melting in the core material in brazing heating. This may cause deformation of the core material, and occurrence of erosion to the core material with the molten brazing material, and deteriorate the brazing properties and corrosion resistance.

It is effective to further add Si, Cu, and/or Zn to the intermediate material, to reduce the melting point. When the intermediate material has a large thickness, there is high possibility that Bi and Li, Be, Ba, Ca, and/or Mg existing on the core material surface side of the intermediate material remain even after brazing heating, and causes much waste. By contrast, when the intermediate material is thin, dissolution with the molten brazing material can be expected, but a thin intermediate material requires increase in Bi concentration and Li, Be, Ba, Ca, and/or Mg concentration in the intermediate material, and manufacturing of the material becomes difficult. In the case of using a brazing material with low Si concentration, the intermediate material is hardly dissolved. When Si, Cu, and/or Zn is added to the intermediate material, the intermediate material itself is molten during brazing heating, and Bi and Li, Be, Ba, Ca, and/or Mg can be actively supplied into the brazing material. In addition, by melting partly or wholly the intermediate material before the brazing material is molten, Bi and Li, Be, Ba, Ca, and/or Mg can be immediately supplied into the brazing material when the brazing material starts melting, to enable early destruction of the oxide film and ultrahigh-speed heating. In addition, the intermediate material can also function as the brazing material.

As preferable contents of Si, Cu, and Zn functioning effectively to decrease the melting point of the intermediate material, the Si content is 13% or less, the Cu content is 6% or less, and the Zn content is 6% or less. A content of each of them exceeding the upper limit causes easy occurrence of crack in rolling of the material, and causes difficulty in manufacturing of the brazing sheet. As more preferable lower limit values to decrease the melting point, the Si content is 3.0%, the Cu content is 1.0%, and the Zn content is 1.0%.

The sacrificial anode material used in the second embodiment and the third embodiment provides an anti-corrosion effect to the sacrificial anode material side. A preferable content of Zn in the sacrificial anode material is 0.9% to 6%. A Zn content less than 0.9% fails to achieve a sufficient anti-corrosion effect. A Zn content exceeding 6% promotes corrosion, and deteriorates the corrosion-through-life.

The brazing sheet according to the present invention is manufactured by preparing ingots of the core material, the brazing material, the intermediate material, and the sacrificial anode material with the compositions described above, rolling some of them to a predetermined thickness, and performing clad rolling using them by a conventional method. The intermediate material may be an ingot cut in a plate shape, or a rolled sheet (hot rolled sheet, cool rolled sheet) obtained by rolling the ingot.

Brazing using the aluminum alloy brazing sheet according to the present invention is performed by assembling the aluminum alloy brazing sheet according to any one of claims 1 to 6 described above, and performing brazing in an inert gas atmosphere or vacuum, without applying a flux, to manufacture a heat exchanger or a mechanical component.

As another example, brazing is performed by assembling the aluminum alloy brazing sheet according to any one of claims 1 to 5 described above, applying a fluoride-based flux to all or part of the brazing portion, and performing brazing in an inert gas atmosphere, to manufacture a heat exchanger or a mechanical component.

In brazing using the flux, it is preferable to apply a fluoride-based flux to a brazing portion with high brazing difficulty with an application quantity of 1 to 20 g/m², in a product to be manufactured, such as a heat exchanger and a mechanical component. A flux application quantity less than 1 g/m² produces scarce effect of flux application. A flux application quantity exceeding 20 g/m² increases the flux residue, and deteriorates the external appearance of the brazed product.

The oxygen concentration and the moisture content (dew point) in the atmosphere are to be noted in the case of performing brazing without using a flux in an inert gas atmosphere. Increase in oxygen concentration in the atmosphere may cause difficulty in brazing without using a flux. Also in the case of using the brazing sheet of the present invention, stable brazing is possible without using a flux, when the oxygen concentration in the nitrogen gas atmosphere is 20 ppm or less. However, when the oxygen concentration in the atmosphere exceeds 20 ppm, in the case of brazing a product having a hollow structure, the brazing properties of the external portion has a problem, although the internal portion can be brazed soundly even without a flux with the action of Li, Be, Ba, Ca, and or Mg. This is caused by reoxidation of the surface of the brazing material during brazing heating. To improve the brazing properties of the external portion, it is preferable to apply a method of applying a flux to the brazing portion to perform brazing.

The present invention improves the brazing properties, with the flux molten and activated immediately before melting of the brazing material, and achieves sound brazing, in the external portion influenced by reoxidation. In addition, because Li, Be, Ba, Ca, and/or Mg effectively act to embrittle the oxide film, the flux quantity to be applied can be reduced in comparison with an ordinary brazing sheet. As described above, the present invention enables drastic reduction in a use quantity of a flux, in comparison with the current mainstream methods (CAB or Nocolok brazing) of applying a flux to the whole surface to perform brazing, and also produces the effect of avoiding clogging due to a flux, in a heat exchanger with a fine refrigerant channel. The present invention also enables secure brazing of a joint with high brazing difficulty, by applying a flux.

The flux is generally a fluoride-based flux including KF and AlF₃ as basic composition. However, because the flux reacts with Mg and causes a decrease in the flux function, using both application of the flux and addition of Mg to the material is not preferable. However, a small quantity of Mg may be added, as long as it does not cause an excessive decrease in the flux function. The addition quantity to achieve the above is less than 0.1% when it is added to the brazing material, and less than 0.2% when it is added to the core material. Although some brazing methods use a Cs-based flux or a Cs-mixed flux that hardly causes a decrease in the flux function, such methods require higher cost and lower brazing stability than those of the method according to the present invention.

The present invention also has the following advantage. Specifically, because an ordinary material that can be produced regardless of the location (material that can be produced or supplied in various places in the world) can be applied as the brazing material and the core material of the brazing sheet of the present invention, the brazing sheet of the present invention can be produced in any place in the world, regardless of the location, as long as the factory is capable of manufacturing an ordinary aluminum clad material. The intermediate material being a special material may be acquired by obtaining a plain coil rolled within or outside the country or an ingot slab, and using a cut material thereof. Because the rate of the intermediate material occupying the brazing sheet is low, that is, several percent or less, substantially approximately 1%, the intermediate material has small influence on the cost caused by transport costs and customs duties, even when a plain coil and/or an ingot slab thereof is imported to be used.

The degree of freedom of the site is effectively exhibited also in the site for producing the products, such as heat exchangers, as well as production of the material. Specifically, in production of heat exchangers, acid and/or alkaline are used for etching before brazing, but much load is required for the solution management and waste liquid treatment. For this reason, many processing manufacturers for heat exchangers and the like often avoid execution of etching, and etching in abroad processing manufacturers is difficult. The present invention can also solve such a problem.

### [Examples]

The following is explanation of examples of the present invention in comparison with a comparative example, to prove the effects of the present invention. These examples illustrate an embodiment of the present invention, and the present invention is not limited thereto.

### Example 1

The brazing material, the core material, the intermediate material, and the sacrificial anode material having the compositions listed in Table 1 were individually casted into ingots by continuous casting. For the core material, the obtained ingot was machined to a size of 163 mm in length, 163 mm in width, and 27 mm in thickness. For the brazing material, the obtained ingot was subjected to hot rolling to a thickness of 3 mm, and cut to a size of 163 mm in length and 163 mm in width.

For the intermediate material, the obtained ingot was subjected to hot rolling to a thickness of 3mm, thereafter subjected to cold rolling to a thickness of 0.25 mm to 2 mm, and cut to a size of 163 mm in length and 163 mm in width. For some of the intermediate material, a cut product of the ingot was prepared. For the sacrificial anode material, the obtained ingot was subjected to hot rolling to a thickness of 3mm, thereafter subjected to cold rolling to a thickness of 1.5 mm, and cut to a size of 163 mm in length and 163 mm in width.

The brazing material, the core material, the intermediate material, and the sacrificial anode material prepared were subjected to clad rolling by a conventional method, to obtain an annealed clad sheet material with a thickness of 0.4 mm. The sheet material was used as a test material.

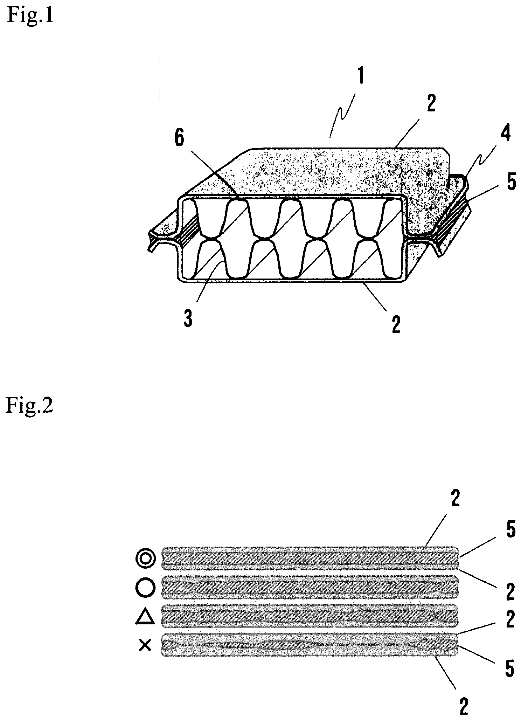

After the test material was pressed in a cup shape, two test materials are prepared. One material was prepared by subjecting the material to only degreasing (without etching) with acetone, and the other material was prepared by subjecting the material to degreasing with acetone and thereafter to etching with weak acid (with etching). Each of the test materials was incorporated into a cup test piece illustrated in Fig. 1. A fin obtained by molding and degreasing a 3003 alloy sheet material with a thickness of 0.1 mm was disposed inside the cup test piece, and brazed without a flux.

The brazing was performed in a nitrogen gas furnace, or in a vacuum furnace. The nitrogen gas furnace was a two-chambered experimental furnace, and the oxygen concentration thereof in brazing was 15 ppm to 20 ppm. The vacuum furnace was a batch-type one-chambered experimental furnace, and the in-furnace pressure thereof in brazing was 5×10⁻³ Pa to 8×10⁻³ Pa. The temperature which each of the test pieces reached was set to 600°C.

In Fig. 1, 1 denotes a cup test piece, 2 denotes a test material, 3 denotes a fin, 4 denotes a flare groove joint, and 5 denotes a fillet formed outside the flare groove joint. The following evaluation was performed on a fillet 5 (expressed as "outside" in the cup brazing test in Table 1) formed on the outside of the flare groove joint, and a fillet 6 (expressed as "inside" in the cup brazing test in Table 1) formed in a joint portion between the test piece and the fin. Table 1 lists the evaluation results.

As illustrated in Fig. 2, for the "outside", the fillet 5 formed on the outside of the flare groove joint 4 was evaluated by observation with four levels. The four levels are: "⊚: a continuous fillet is formed with a uniform size", "○: a state in which 50% or more of the fillet has a uniform size although the fillet size fluctuates, or a state in which the fillet is small although the fillet has a uniform shape", "Δ: a state in which the fillet is partly disconnected and discontinuous, or a state in which 50% or more of the fillet has a non-uniform size", and "×: fillet is hardly formed or the material is not brazed". Among the levels, ⊚ and ○ were determined as passing levels. For the "inside", the brazed test piece was divided into two, and the fillet formation state was evaluated by observation with four levels in the same manner as above, for the inside of the flare groove joint and the jointing portion of the fin.

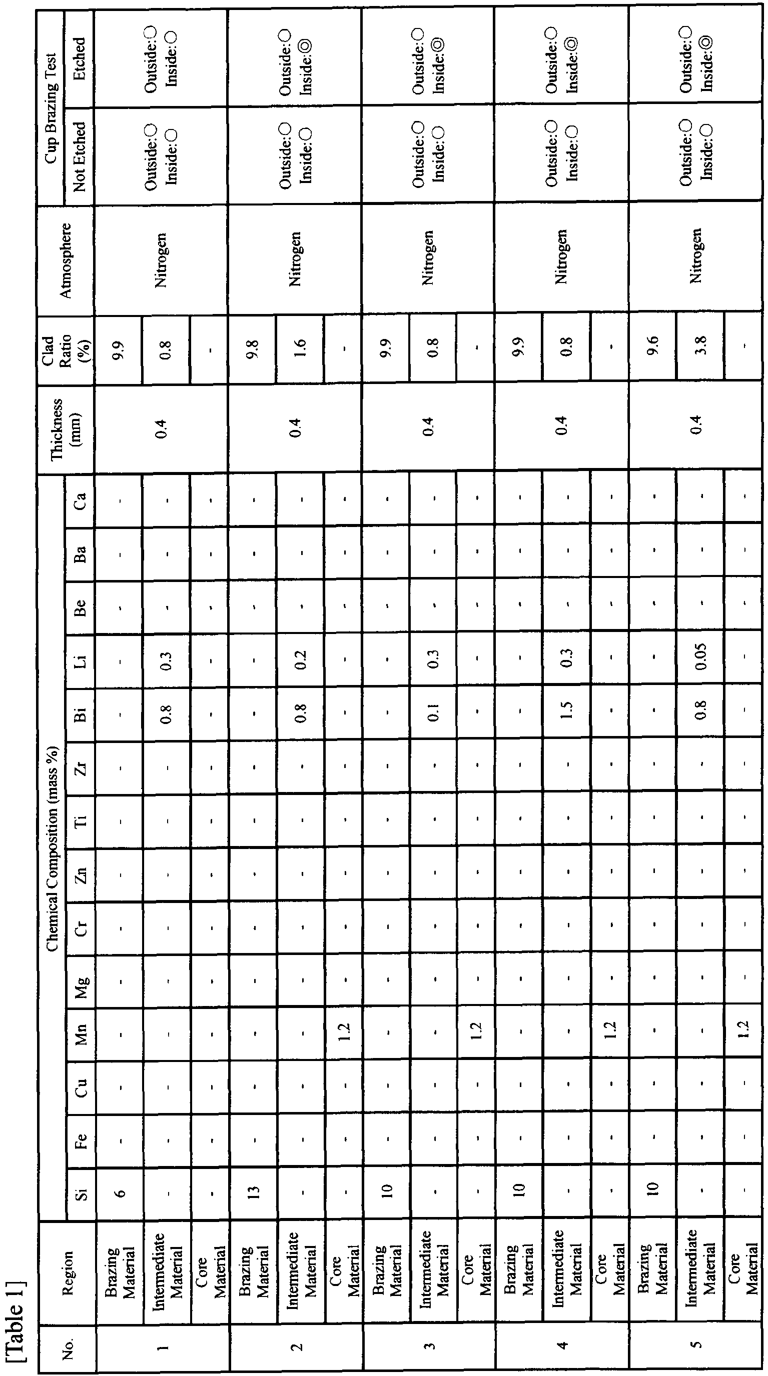

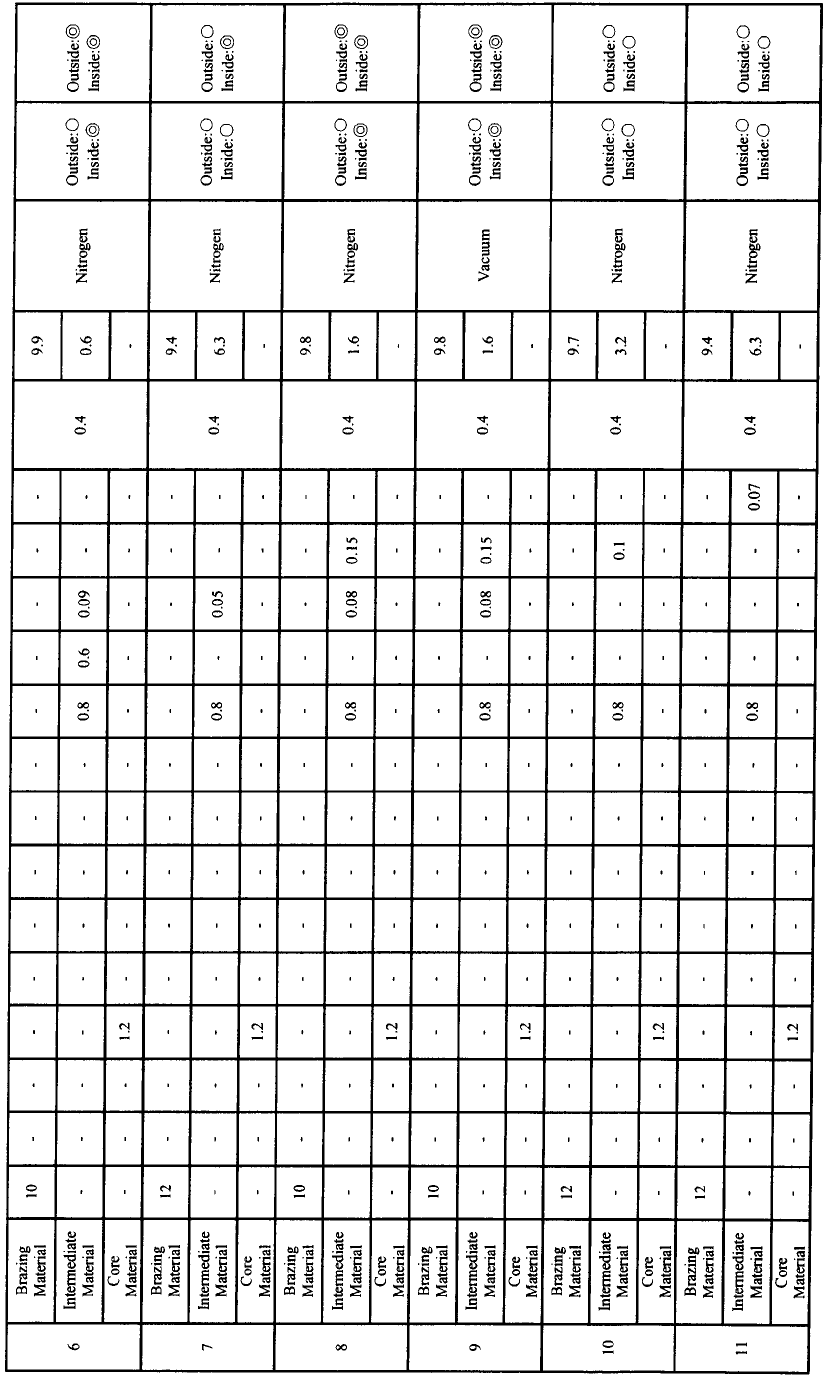

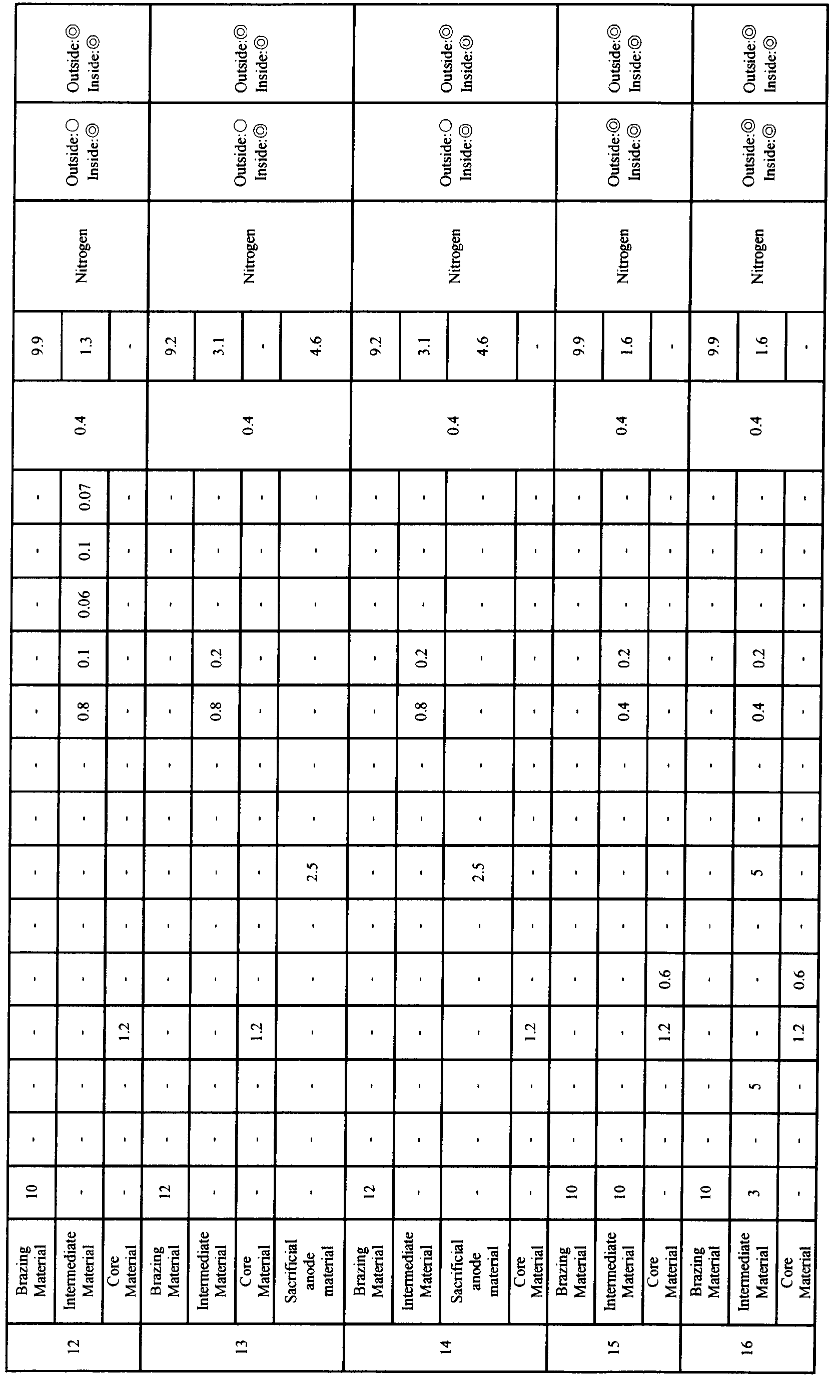

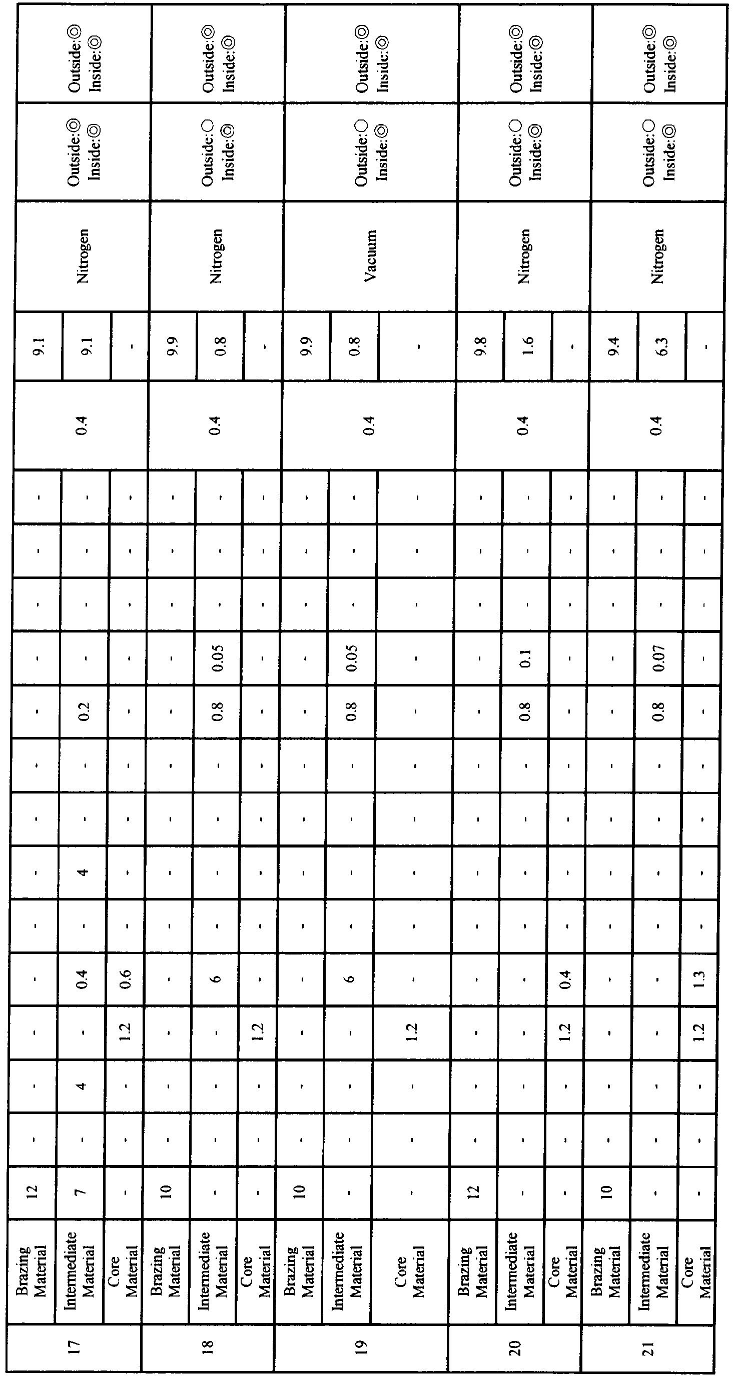

As listed in Table 1, each of the cup test pieces obtained by incorporating the test materials 1 to 21 according to the present invention proved to be capable of producing an excellent brazed state of a passing level, without etching. Although a cut ingot material (163 mm in length, 163 mm in width, and 3 mm in thickness) was applied as the intermediate material to the test material 17, the cup test piece obtained by incorporating the test material 17 also produced an excellent brazed state in the same manner.

### Comparative Example 1

The brazing material, the core material, the intermediate material, and the sacrificial anode material having the compositions listed in Table 2 were casted into ingots by continuous casting, to manufacture an annealed clad sheet materials with a thickness of 0.4 mm in the same manner as Example 1. Cup test pieces were prepared with the sheet materials serving as the test materials, and subjected to brazing heating in a nitrogen gas furnace under the same conditions as those of Example 1, to evaluate the brazed states of the cup test pieces in the same manner as Example 1. Table 2 lists the evaluation results. In Table 2, the underlined values are values that fail to satisfy the conditions of the present invention. As a test material for comparison, a clad material in which no intermediate material is interposed was prepared in the same manner.

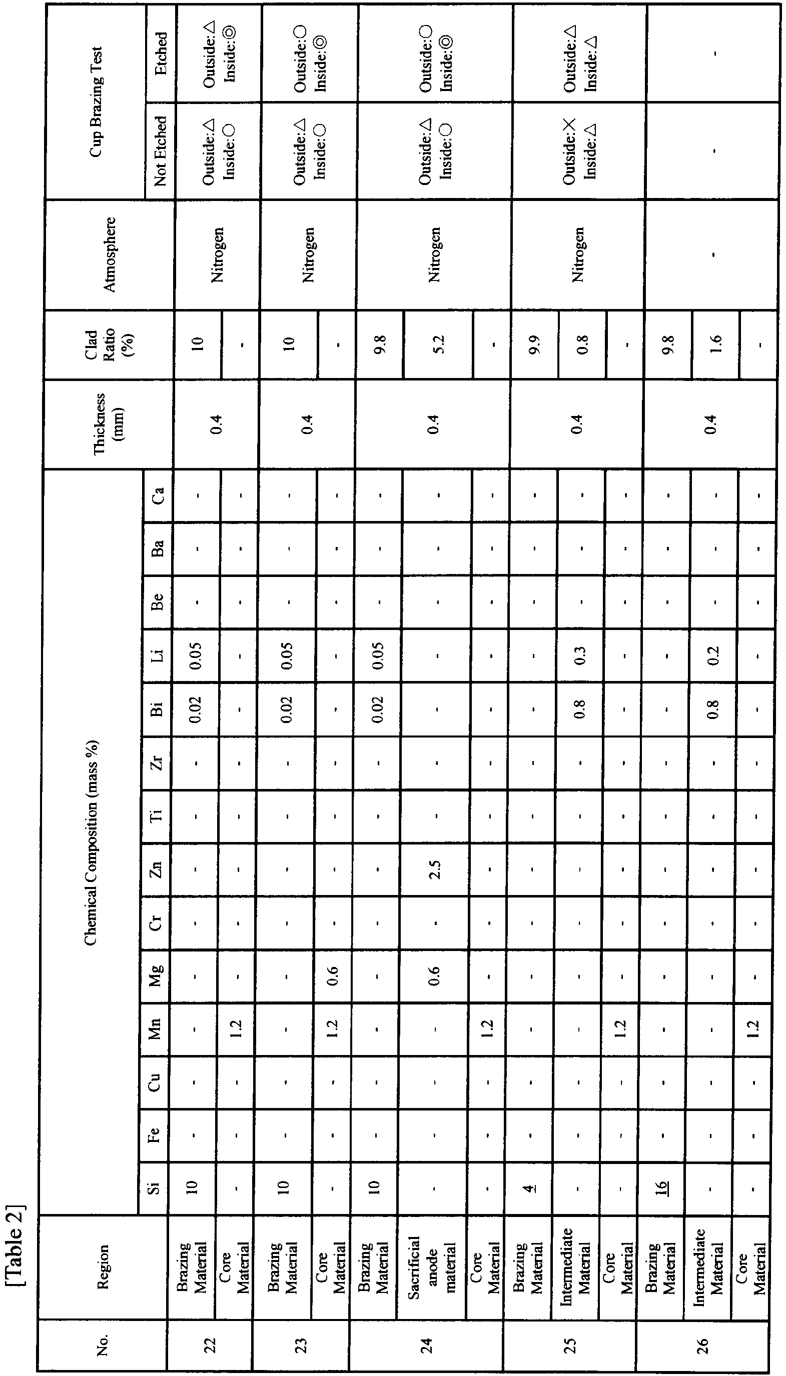

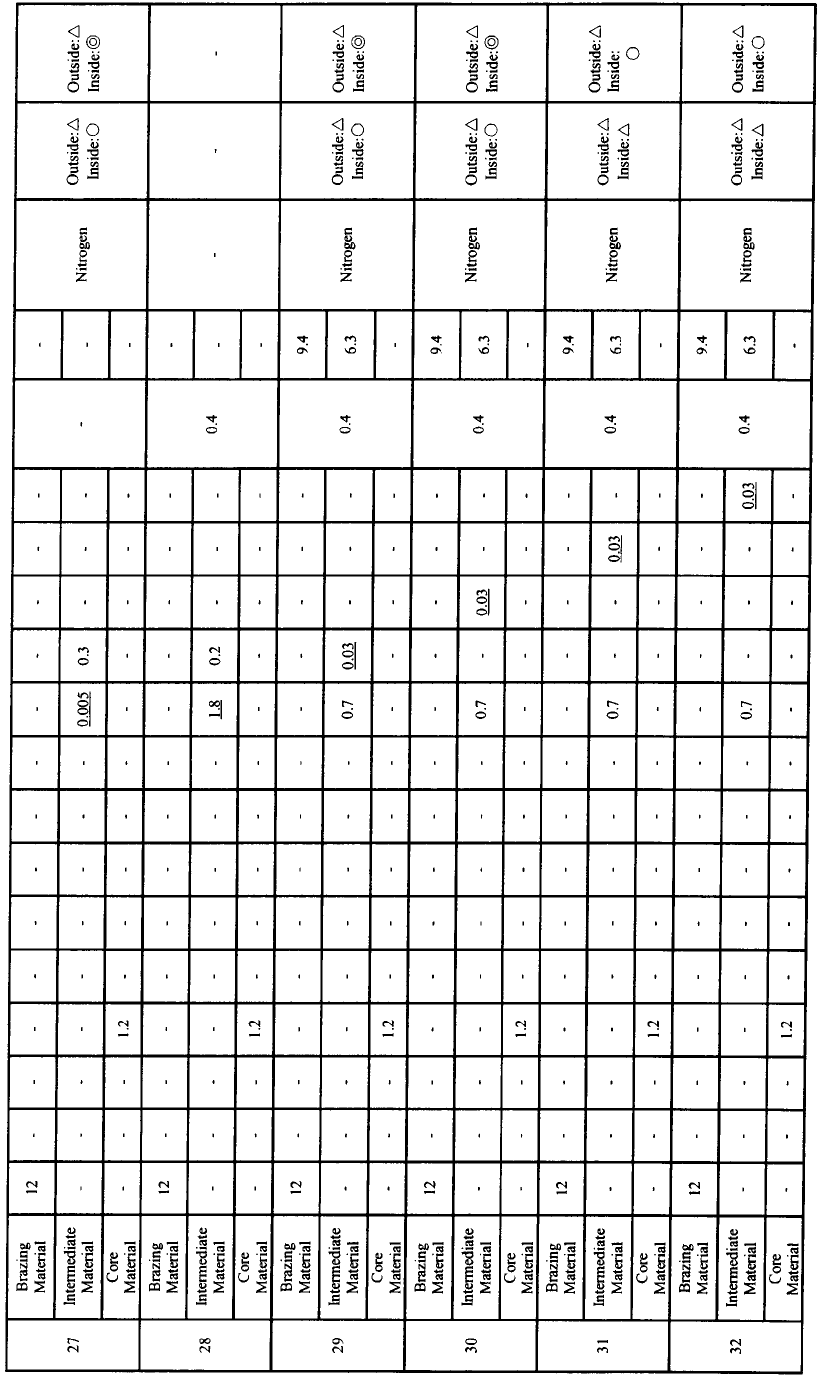

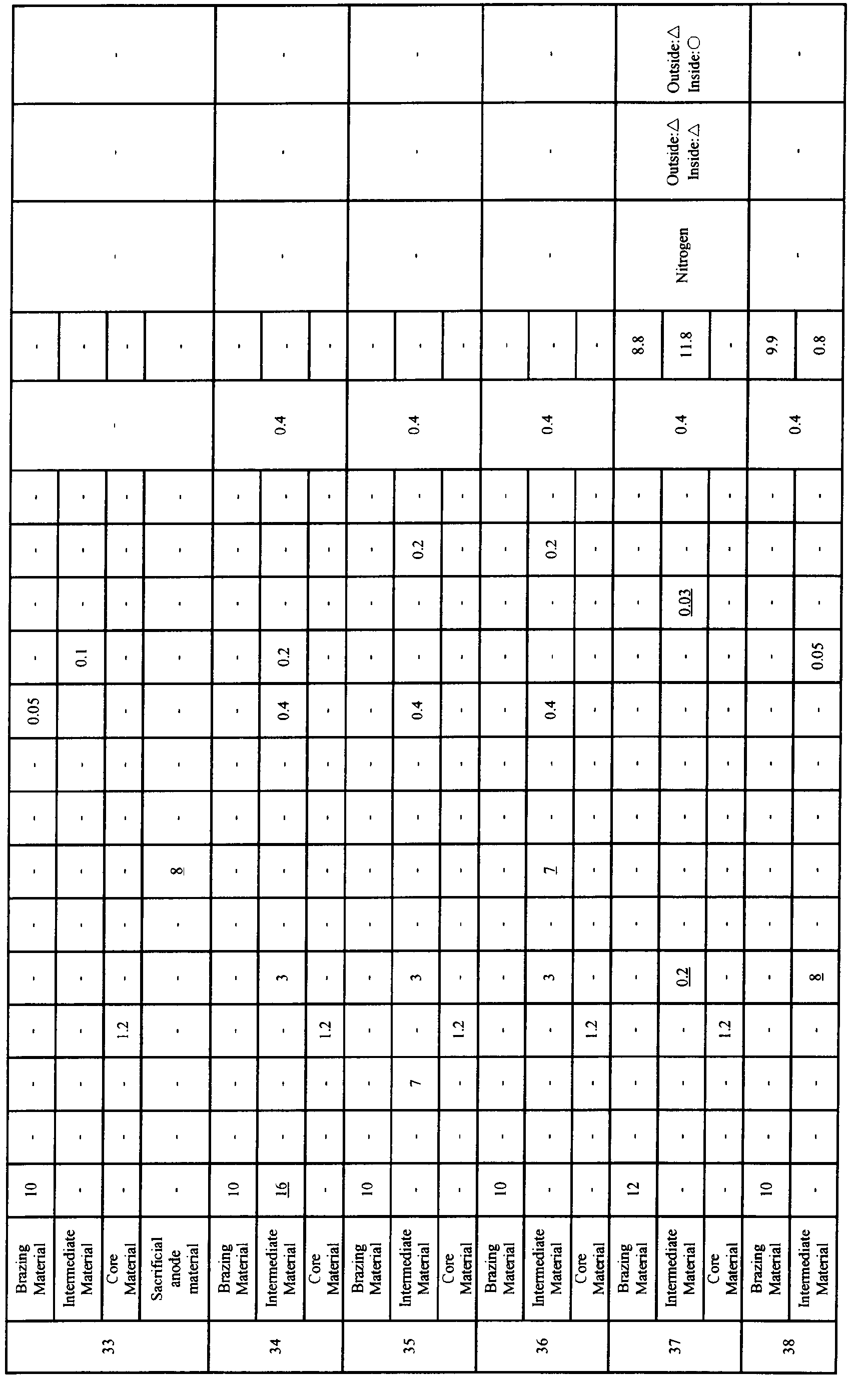

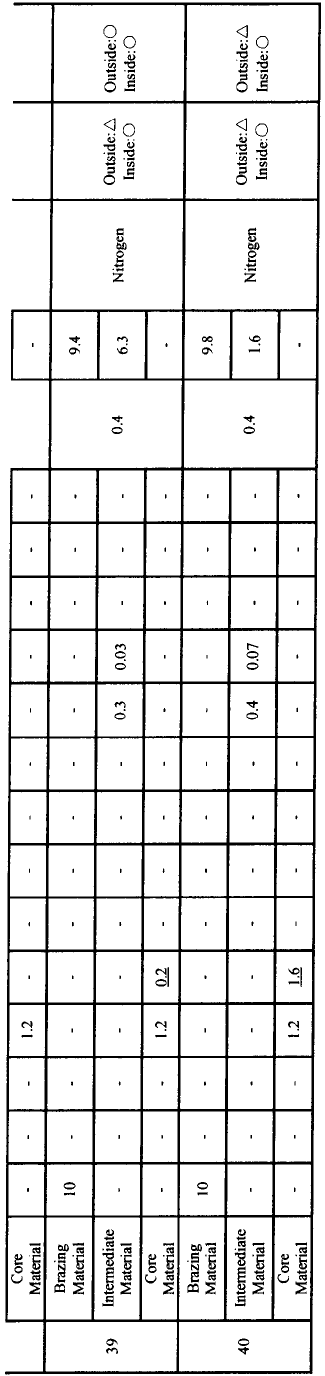

As listed in Table 2, the test materials 22, 23, and 24 include no intermediate material interposed. The cup test pieces including the test materials 22 to 24 had inferior brazing properties for the outside without etching.

Because the test material 25 includes a brazing material with a low Si content, the test material 25 incurred deficiency in a quantity of the molten brazing material, and had inferior brazing properties for both the inside and the outside. Because the test material 26 includes a brazing material with a high Si content, crack occurred in rolling of the material.

The test material 27 includes an intermediate material with a low Bi content, and incurred poor function to promote destruction of the oxide film on the surface of the brazing material, and had inferior brazing properties. Because the test material 28 includes an intermediate material with a high Bi content, crack occurred in rolling of the material.

The test materials 29 to 32 include intermediate materials with low contents of Li, Be, Ba, and Ca, respectively, and incurred poor function to promote destruction of the oxide film on the surface of the brazing material, and had inferior brazing properties.

Because the test material 33 includes a sacrificial anode material with a high Zn content, crack occurred in rolling of the material. Because the test materials 34 to 36 include intermediate materials with high contents of Si, Cu, and Zn, respectively, crack occurred in rolling of the material.

The test material 37 includes an intermediate material including Mg and Be. Because both the Mg content and the Be content are low, the test material 37 had poor function to break the oxide film on the surface of the brazing material, and had inferior brazing properties.

Because the test material 38 includes an intermediate material with a high Mg content, crack occurred in rolling of the material. The test material 39 includes a core material with a low Mg content, and incurred poor function to promote destruction of the oxide film on the surface of the brazing material, and had inferior brazing properties. Because the test material 40 includes a core material with a high Mg content, erosion of the molten brazing material progresses due to a decrease in the melting point of the core material, and the test material after brazing was deformed.

Example 2 The brazing material, the core material, the intermediate material, and the sacrificial anode material having the compositions listed in Table 3 were casted into ingots by continuous casting, to manufacture an annealed clad sheet materials with a thickness of 0.4 mm in the same manner as Example 1. After the sheet materials were pressed in a cup shape as test materials, two types of test materials were prepared. One type was prepared by subjecting the material to only degreasing (without etching) with acetone, and the other type was prepared by subjecting the material to degreasing with acetone and thereafter to etching with weak acid (with etching). Each of the test materials was incorporated into a cup test piece illustrated in Fig. 1. A fin obtained by molding and degreasing a 3003 alloy sheet material with a thickness of 0.1 mm was disposed inside the cup test piece.

A flux (fluoride-based flux including KF and AlF₃ as basic composition) diluted with alcohol was applied to the outside (fillet formation portion) of the flare groove joint 4 of the cup test piece 1. The cup test piece was subjected to brazing heating under the same conditions as those of Example 1 in a nitrogen gas furnace, to evaluate the brazing state of the cup test piece, in the same manner as Example 1. The flux application quantity was determined by measuring the weight of the test piece with an electronic balance after drying, and obtaining a difference of the weight from the weight of the test piece before application of the flux. Table 3 lists the evaluation results. Table 3 lists the flux quantity applied to the outside (fillet formation portion) of the flare groove joint 4.

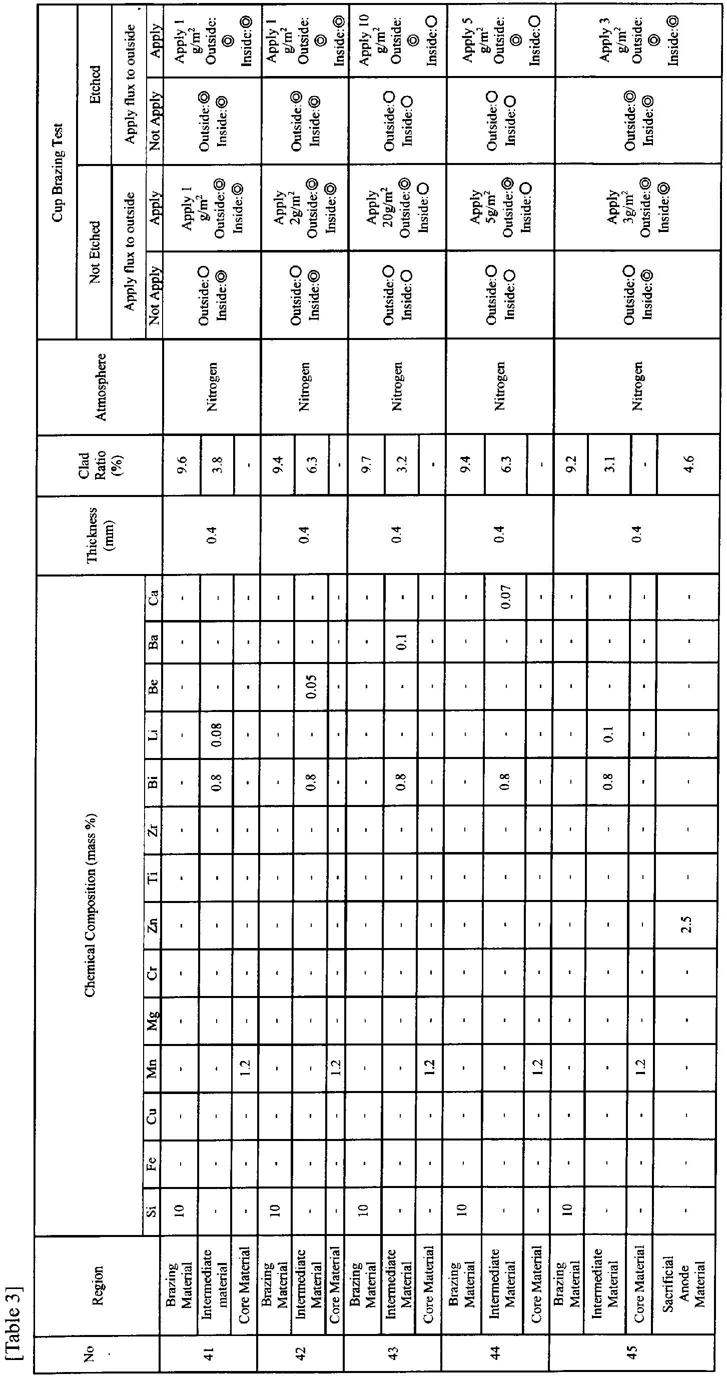

As listed in Table 3, each of the cup test pieces obtained by incorporating the test materials 41 to 45 according to the present invention exhibited an excellent brazed state of the passing level. Each of the test materials 41 to 45 includes the intermediate material including a component other than Mg, that is, Li, Be, Ba, or Ca. It was proved that the brazing properties of the outside surface were stably improved by application of a small quantity of a flux.

### Comparative Example 2

The brazing material, the core material, the intermediate material, and the sacrificial anode material having the compositions listed in Table 4 were casted into ingots by continuous casting, to manufacture an annealed clad sheet materials with a thickness of 0.4 mm in the same manner as Example 1. With the sheet materials used as test materials, cup test pieces were prepared in the same manner as Example 2. In the same manner as Example 2, a flux (fluoride-based flux including KF and AlF₃ as basic composition) diluted with alcohol was applied to the outside (fillet formation portion) of the flare groove joint 4 of the cup test piece 1. The cup test piece was subjected to brazing heating under the same conditions as those of Example 1 in a nitrogen gas furnace, to evaluate the brazing state of the cup test piece, in the same manner as Example 2. Table 4 lists the evaluation results. Table 3 lists the flux quantity applied to the outside (fillet formation portion) of the flare groove joint 4. In Table 4, values that fail to satisfy the conditions of the present invention are underlined.

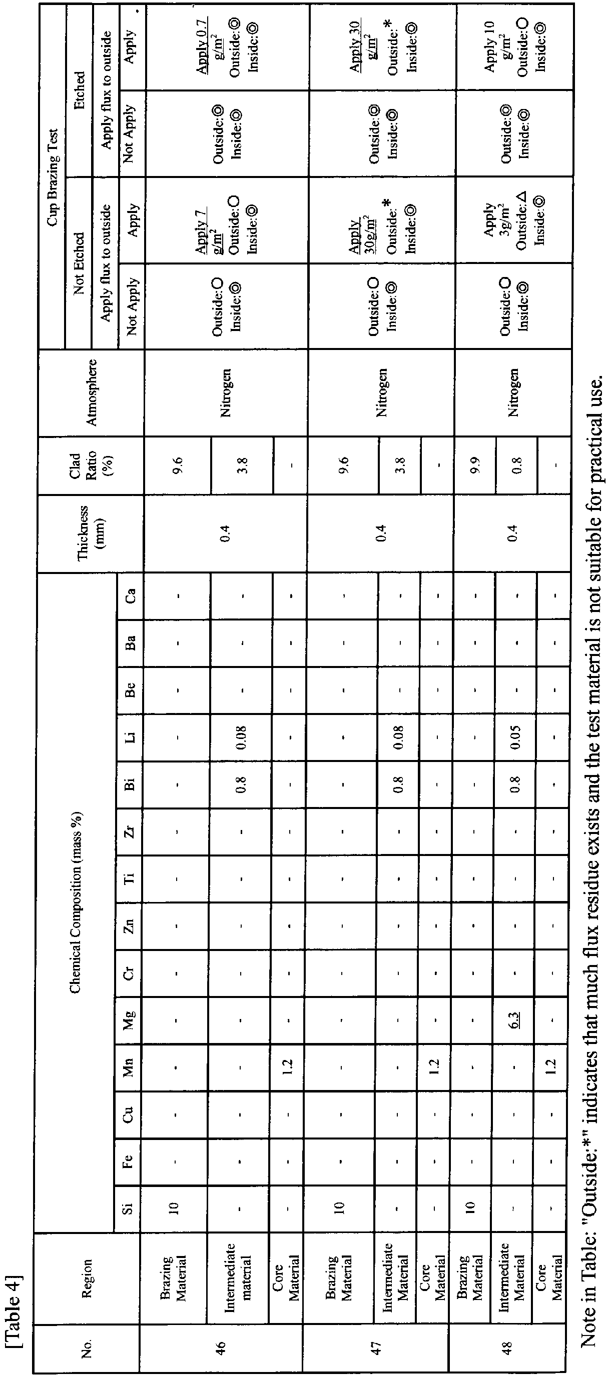

As listed in Table 4, the cup test piece obtained by incorporating the test material 46 had a small flux application quantity, although the brazing state reached the passing level. For this reason, the cup test piece exhibited less effect of improving the brazing properties with application of a flux than that of the cup test piece obtained by incorporating the test material 41 in Table 3 in which a proper quantity of a flux was applied.

The cup test piece obtained by incorporating the test material 47 had a large flux application quantity, had much flux residue after brazing, and was not suitable for practical use. Because the test material 48 includes the intermediate material including much Mg, Mg diffused into the surface of the brazing material from the intermediate material reacts with the flux in brazing heating. This reaction causes a decrease in the function of the flux, and causes generation of a solid compound, to impede the brazing properties.

### EXPLANATION OF REFERENCE SIGNS

1 CUP TEST PIECE
2 TEST MATERIAL
3 FIN
4 FLARE GROOVE JOINT
5 FILLET FORMED ON OUTSIDE OF FLARE GROOVE JOINT (expressed as "outside" in cup brazing test listed in Table 1)
6 FILLET FORMED IN JOINT PORTION BETWEEN TEST MATERIAL AND FIN (expressed as "inside" in cup brazing test listed in Table 1)

## Claims

1. A brazing sheet used for brazing aluminum (including aluminum alloy, the same is applicable through the claims) in an inert gas atmosphere or vacuum, the brazing sheet being formed by arranging a brazing material on one side or both sides of a core material made of pure aluminum or aluminum alloy, the brazing material including 6% to 13% (% by mass, the same is applicable through the claims) of Si and the balance being Al and inevitable impurities, and performing cladding with an intermediate material interposed between the core material and the brazing material, the intermediate material including 0.01% to 1.5% of Bi, at least one of 0.05% or more of Li, 0.05% or more of Be, 0.05% or more of Ba, and 0.05% or more of Ca, and the balance being Al and inevitable impurities.

2. A brazing sheet used for brazing aluminum in an inert gas atmosphere or vacuum, the brazing sheet being formed by arranging a brazing material on one side or both sides of a core material made of pure aluminum or aluminum alloy, the brazing material including 6% to 13% of Si and the balance being Al and inevitable impurities, and performing cladding with an intermediate material and a sacrificial anode material interposed between the core material and the brazing material such that the materials are arranged in an order of the core material, the sacrificial anode material, the intermediate material, and the brazing material, the intermediate material including 0.01% to 1.5% of Bi, at least one of 0.05% or more of Li, 0.05% or more of Be, 0.05% or more of Ba, and 0.05% or more of Ca, and the balance being Al and inevitable impurities, the sacrificial anode material including 0.9% to 6% of Zn and the balance being Al and inevitable impurities.

3. A brazing sheet used for brazing aluminum in an inert gas atmosphere or vacuum, the brazing sheet being formed by arranging a brazing material on one side of a core material made of pure aluminum or aluminum alloy, the brazing material including 6% to 13% of Si and the balance being Al and inevitable impurities, arranging a sacrificial anode material on the other side of the core material, the sacrificial anode material including 0.9% to 6% of Zn and the balance being Al and inevitable impurities, and performing cladding with an intermediate material interposed between the core material and the brazing material, the intermediate material including 0.01% to 1.5% of Bi and at least one of 0.05% or more of Li, 0.05% or more of Be, 0.05% or more of Ba, and 0.05% or more of Ca, and the balance being Al and inevitable impurities.

4. The aluminum alloy brazing sheet according to any one of claims 1 to 3, wherein the core material of the aluminum alloy includes at least one of 1.8% or less of Mn, 1.2% or less of Si, 1.0% or less of Fe, 1.5% or less of Cu, 0.8% or less of Zn, 0.2% or less of Ti, and 0.5% or less of Zr, and the balance being Al and inevitable impurities.

5. The aluminum alloy brazing sheet according to any one of claims 1 to 4, wherein the intermediate material further includes at least one of 13% or less of Si, 6% or less of Cu, and 6% or less of Zn.

6. The aluminum alloy brazing sheet according to any one of claims 1 to 5, wherein one or both of the core material and the intermediate material further includes 0.4% to 6% of Mg.

7. The aluminum alloy brazing sheet according to any one of claims 1 to 6, wherein the brazing sheet is used for brazing aluminum in an inert gas atmosphere or vacuum, without using a flux.

8. The aluminum alloy brazing sheet according to any one of claims 1 to 5, wherein the brazing sheet is used for brazing aluminum in an inert gas atmosphere, and a fluoride-based flux is applied to whole or part of a brazed portion with an application quantity of 1 to 20 g/m².
